# EUROPÄISCHE PATENTSCHRIFT

(11) **EP 1 285 800 B1**
(45) Veröffentlichungstag und Bekanntmachung des Hinweises auf die Patenterteilung: **29.09.2004**
(21) Anmeldenummer: 02016587.4
(22) Anmeldetag: 25.07.2002
(51) Int. Cl.: B60J 7/12

(54) **Falt- oder Klappverdeck für Cabriolets, Roadster od.dgl., sowie Verfahren zur Herstellung eines solchen Verdecks**
Foldable or tiltable top for convertible, roadster or similar vehicle, as well as fabrication method for such a top
Capote pliante ou basculante pour cabriolet, roadster ou véhicule similaire, comme aussi méthode de fabrication d'une telle capote

(30) Priorität: 22.08.2001 DE 10140194; 26.06.2002 DE 10228613
(43) Veröffentlichungstag der Anmeldung: 26.02.2003
(73) Patentinhaber: PARAT Automotive, Schönenbach GmbH + Co. KG, 42897 Remscheid (DE)
(72) Erfinder: Schönenbach, Heinz, 42897 Remscheid (DE); Windpassinger, Martin, 94051 Hauzenberg (DE); Kasparak, Manfred, 94089 Neureichenau (DE)
(74) Vertreter: Patentanwälte Ostriga, Sonnet, Wirths & Roche

(56) Entgegenhaltungen:
- EP-A- 0 873 896
- DE-U- 29 922 552
- US-B1- 6 183 037
- PATENT ABSTRACTS OF JAPAN vol. 1997, no. 08, 29. August 1997 (1997-08-29) & JP 09 109306 A (PAJIERO SEIZO KK), 28. April 1997 (1997-04-28)

## Beschreibung

Die Erfindung betrifft ein Falt-oder klappverdeck gemäß dem, in DE 19805657A offenbarten Oberbegriff der Ansprüche 1 und 7, sowie ein Verfahren zu deren Herstellung. Übliche Faltverdecke für Cabriolets weisen einen an Schwenkspriegeln getragenen flexiblen Verdeckbezug auf, der herkömmlicherweise aus mehreren Zuschnittsteilen besteht, die jeweils mittels einer Kappnaht verbunden sind (vgl. DE 41 28 115 C1).

Ein z.B. aus DE 41 28 115 C1 bekanntes Faltverdeck mit sog. "Längskappnaht" weist drei Zuschnittsteile auf, nämlich zwei schmale seitliche und einen breiteren mittigen Zuschnitt, der im wesentlichen die Dachpartie und die mit Scheibenausschnitt versehene Heckpartie umfasst. Es sind somit zwei Kappnähte erforderlich, die sich im wesentlichen in Fahrzeuglängsrichtung über das gesamte Verdeck hinwegziehen. Aufgrund dieses Kappnahtverlaufs ergeben sich Probleme beim Ablegen des gefalteten Verdecks in den Verdeckkasten, da die Kappnähte mitgefaltet werden und sich, relativ stark auftragend, zumindest teilweise auf sich selbst ablegen.

Bei einem anderen Verdeck (vgl. DE 82 05 999 U1) besteht der Verdeckbezug nur aus zwei Zuschnittsteilen, deren einer im wesentlichen die Dachpartie mit zwei hinteren seitlichen Zwickeln und deren anderer die Heckpartie und seitlich daran anschließende Zwickel umfasst. Hier ist nur eine Kappnaht als sog. "Querkappnaht" erforderlich, und das Ablageverhalten dieses Verdecks verbessert, da sich diese Kappnaht hauptsächlich quer zur Fahrzeuglängsrichtung erstreckt.

Schließlich ist es z.B. aus DE 198 05 657 A1 bekannt, bei einem Faltverdeck für ein Cabrioletfahrzeug zumindest den Verdeckbezug durch thermische Umformen in eine dreidimensionale, der Kontur des Faltverdecks angepasste Form zu bringen. Dabei besteht der Verdeckstoff aus einem Gewebe mit dreischichtigem Aufbau mit einer Gummischicht aus Synthesekautschuk als Zwischenschicht. Die thermische Umformung des Verdeckbezugs erfolgt durch Tiefziehen unter Wärmeeinwirkung, vorzugsweise in einem Arbeitsgang mit der Vulkanisation der Zwischenschicht aus Synthesekautschuk. Obwohl dieser Verdeckbezug keine Nähte erfordert, ist er in der Herstellung aufwendig.

Aufgabe der vorliegenden Erfindung ist es daher, ein Falt- oder Klappverdeck für Cabriolets, Roadster od.dgl. zur Verfügung zu stellen, das gegenüber den herkömmlichen Verdecken weiter verbessert ist.

Eine erste erfindungsgemäße Lösung dieser Aufgabe besteht entsprechend den Merkmalen des unabhängigen Anspruchs 1 in einem Verdeck mit einem einteiligen Verdeckbezug, der aus einem hoch-dehnfähigen Oberstoff besteht, der auf der Innenseite mit einer dünnen thermoplastischen Folie kaschiert ist, die als Verbindungsglied zwischen dem Verdeckbezug und einer im wesentlichen vollflächigen Gießharz-Schaumschicht angeordnet ist.

Das Material für die Außenhaut des Verdeckbezugs besteht vorteilhaft aus einem Gewebe mit ca. 300-400% Dehnfähigkeit, beispielsweise aus Polyacryl.

Die Folie ist vorzugsweise etwa 20µm dünn und besteht bevorzugt aus einem thermoplastischen Polyurethan (TPU).

Die Schaumschicht auf der Innenseite des Verdeckbezugs ist vorzugsweise aus einem Zweikomponenten-PUR-Gießharzsystem gebildet mit einer Härte von beispielsweise etwa 40 Shore D. Dieses Material ist auf die PUR-Folie aufgeschäumt. Weitere Einzelheiten betr. ein PUR-Schaumsystem der Art eines Zweikomponenten-PUR-Gießharzsystem sind in EP 1 092 576 A2 beschrieben, worauf hiermit Bezug genommen wird.

Ein erfindungsgemäßes Verfahren zur Herstellung eines Verdecks der vorstehend beschriebenen Art umfasst nach Anspruch 18 im wesentlichen die folgenden Schritte:

Ein hoch dehnbarer Oberstoff, dessen Kontur weitestgehend der Kontur des späteren Verdecks entspricht, wird in ein formgebendes Werkzeug eingelegt. Der nach oben offene Hohlraum der Werkzeugform entspricht dabei im wesentlichen dem eines aufgespannten (d.h. über dem Fahrzeug geschlossenen) Verdecks It. Fahrzeugvorgabe.

Die Innenfläche des Oberstoffs wird mit einer dünnen Folie (z.B. 20µm Folie aus thermoplastischem Polyurethan) überdeckt.

Durch ein im Werkzeug eingebrachtes Vakuumnest wird die Folie zusammen mit dem Oberstoff in das Werkzeug eingezogen und schmiegt sich satt an die Oberfläche des Formhohlraums.

Alternativ kann entsprechend Anspruch 19 der Oberstoff aber auch mit einer Folie kaschiert werden, bevor dieser Verbund in das Werkzeug eingelegt wird, welches die Schaumschicht auf die Folienseite aufgießt.

Nach dem Schließen des Werkzeugoberteils wird der Verbund Oberstoff / Folie mit einem formgebenden, elastischen und knickbaren PUR-Schaum mit einer Härte von beispielsweise etwa 40 Shore D hinterschäumt. Die Folie dient dabei sowohl als Dichtmedium für das Vakuum als auch als eine Verschweißung ermöglichendes Verbindungsglied von Oberstoff und Schaumsystem. Außerdem hat die insbesondere fluiddichte Folie die Aufgabe, ein 'Durchschießen' des PUR-Schaums in das Obergewebe, also in den am Fahrzeug von außen sichtbaren Verdeckstoff, zu verhindern.

Nach Ablauf der für das Zweikomponenten-PUR-Gießharzsystem maßgeblichen Reaktionszeit im Werkzeug wird in einer weiteren Stufe die Kontur des Verdecks beschnitten.

Sodann wird das Verdeck dem Werkzeug entnommen. Es zeigt die Kontur eines Verdecks, so wie dies am Fahrzeug aussehen soll.

Vorzugsweise werden im aufgebrachten Schaum werkzeugseitig Sollknickstellen vorgesehen, so dass sich das Verdeck optimal in den Verdeckkasten ablegen lässt. Die Anbindungen an das Verdeckgestell, die sogenannten Spriegelanbindungen, werden vorzugsweise ebenfalls bereits im Schäumwerkzeug mit integriert.

Wesentliche Vorteile der bislang offenbarten Erfindung sind folgende:

Das Verdeck hat keinerlei abzudichtende Nähte, verursacht deshalb keine Windgeräusche und bildet auch keine Schmutzfangnischen bildende Übergänge aus wie bisher in den Nahtbereichen. Die Konfektion des Verdecks und somit seine Herstellung insgesamt sind sehr kostengünstig. Da keine Verdecklagen miteinander vernäht werden müssen, sondern das Verdeck vielmehr als Ganzes gewissermaßen ,aus der Form fällt', können sich die einzelnen Verdecklagen auch nicht gegeneinander verschieben, was bislang wiederholt zu Ausschuss führte.

Das Verdeck verfügt über eine einfache Möglichkeit einer definierbaren Ablage in den Verdeckkasten. Hier stören insbesondere keine bislang erforderlichen Kappnähte. Die gewissermaßen als Tragschicht dienende PUR-Schicht hat zusätzlich günstige schall- und wärmedämmende Eigenschaften. Schließlich zeichnet sich das Verdeck durch eine besondere Optik bzw. Linienverlauf des Daches aus, die in Grenzen frei wählbar, jedenfalls nicht von Nahtverläufen abhängig sind.

Eine zweite, alternative erfindungsgemäße Lösung der oben genannten Aufgabe besteht entsprechend den Merkmalen des unabhängigen Anspruchs 7 in einem Verdeck mit einem einteiligen Verdeckbezug aus einer dehnbaren Slush-Haut, auf deren Innenseite eine im wesentlichen vollflächige Gießharz-Schaumschicht angeordnet ist, die vorzugsweise ihrerseits auf der Innenfläche von einer hochdehnbaren dünnen PUR-Folie .abgedeckt ist.

Bei dieser PUR-Folie handelt es sich um ein wasserdichtes, winddichtes, aber atmungsaktives Material, gleich oder ähnlich einem solchen, wie man es seit einiger Zeit insbesondere für moderne Sport- und Freizeitkleidung verwendet.

Bei einer Slush-Haut (man spricht auch von Slush-Folie) handelt es sich um eine im Sinterverfahren hergestellte Formhaut aus thermoplastischem Polyurethan (TPU). Solche Häute werden im modernen Automobilbau zur Kaschierung von Innenauskleidungsteilen wie z.B. Armaturentafeln, Hutablagen u.dgl. bereits verwendet. Beispiele für derartige TPU-Häute sind Elastolan® der Elastogran GmbH in 49448 Lemförde oder die TPU-Haut der Firma Recticel in BE-9230 Wetteren.

Die im Rahmen der Erfindung verwendete Slush-Haut ist vorzugsweise etwa 1 bis 2 mm stark, jedoch im Bereich von 0,5 bis 3 mm herstellbar. Ihre Außenfläche ist genarbt oder glatt, ihre Innenfläche glatt oder - etwa zum besseren Anhaften der Hinterschäumung - angeraut.

Die Schaumschicht auf der Innenseite des Verdeckbezugs ist vorzugsweise ein Zweikomponenten-PUR-Gießharzsystem mit einer Härte von beispielsweise etwa 40 Shore D. Dieses Material ist auf die Innenseite der Slush-Haut aufgeschäumt. Weitere grundsätzliche Einzelheiten betr. ein solches PUR-Gießharzsystem sind in EP 1 092 576 A2 beschrieben, worauf hiermit Bezug genommen wird.

Zur Trennung von Werkzeug und PUR-Gießharzsystem kann das Werkzeugoberteil mit einer PUR-Folie (z. B. Walopur® oder Platilon® der Epurex Films GmbH & Co. KG, 29656 Walsrode) abgedeckt werden. Eine solche PUR-Folie ist vorzugsweise hoch dehnbar und weist bevorzugt eine Stärke von etwa 20-70 µm auf.

Aufgrund der Verbindung der wasser- und winddichten, jedoch atmungsaktiven PUR-Folie mit dem Gießharz ergibt sich als weiterer Vorteil dadurch, dass die Oberfläche des Gießharzes abgedeckt wird, dass sich (im Unterschied zu einer Ausführung Schaum auf Schaum) die Gleiteigenschaften beim Ablegen des Verdecks wie auch die Gleiteigenschaften des Verdecks auf Spriegeln, Umlenkern u.dgl. verbessern und die Wasseraufnahme (d.h. Wassereintritt und Eindringen von Feuchtigkeit in den PUR-Schaum) stark eingeschränkt wird. In diesem Zusammenhang kann das PUR-System in seiner fertigen Konsistenz mit einer nicht glatten Oberfläche, sondern leicht 'klebrig' eingestellt werden, was seinerseits den Vorteil hat, dass die Materialoberfläche relativ rutschfest ist und das System gute Schallisoliereigenschaften aufweist.

Für beide Verdecklösungen kommen folgende vorteilhafte Weiterbildungen in Betracht:

An Stellen, an denen das Verdeck sich definiert falten soll, sind - vorzugsweise im wesentlichen linienhafte - Sollknickzonen in der Weise eingearbeitet, dass hier die PUR-Gießharzschicht in ihrem Querschnitt geschwächt ist, von üblicherweise ca. 7 bis 8 mm Dicke auf z.B. nur 2 mm Stärke. Bevorzugt ist hier keine Unterbrechung der Schaumschicht vorgesehen, da diese auch wärme- und schalldämmende Schicht hier Wärmeund Schallbrücken bilden könnte, was nicht erwünscht ist.

Im übrigen können an die innere PUR-Gießharzschicht insbesondere streifenförmige Spriegelanbindungen mit angegossen sein, mit deren Hilfe der Verdeckbezug an den Spriegeln des Verdeckgestells befestigt wird. Diese Anbindungen können vorzugsweise ebenfalls bereits im Schäumwerkzeug mit integriert sein.

Dabei kommen insbesondere zwei verschiedene Ausführungen in Betracht. Eine Möglichkeit besteht darin, die Spriegelanbindungen nur in Schaum und PUR-Folie auszubilden, eine zweite Möglichkeit darin, einen 'Einleger' zu verwenden, und zwar einen Stoff- oder Netzstreifen darin einzulegen, um die Haltekräfte zu erhöhen.

Ein erfindungsgemäßes Verfahren zur Herstellung eines solchen Verdecks der vorstehend beschriebenen Art umfasst entsprechend Anspruch 20 im wesentlichen die folgenden Schritte:

Eine Slush-Haut, deren Kontur weitestgehend der Kontur des späteren Verdecks entspricht, wird in ein formgebendes Werkzeugunterteil eingelegt. Der nach oben offene Hohlraum der Werkzeugform entspricht dabei im wesentlichen dem eines aufgespannten (d.h. über dem Fahrzeug geschlossenen) Verdecks lt. Fahrzeugvorgabe. Sodann wird die Slush-Haut durch ein im Werkzeug eingebrachtes Vakuumnest in das Werkzeug eingezogen und schmiegt sich satt an die Oberfläche des Formhohlraums.

Das formgebende Werkzeugoberteil, wird mit einer dehnbaren PUR-Folie mit einer Dicke von 20-70 µm überdeckt und die Folie durch ein Vakuumnest in das Werkzeugoberteil eingezogen, in dem sich vorzugsweise im übrigen Aussparungen für die Spriegel des Verdeckgestells befinden.

Nun wird über einen Roboter geführten Mischkopf in das offene Werkzeugunterteil ein formgebender, elastischer und knickbarer aus ein Zweikomponenten-PUR-Gießharzsystem gebildeten, PUR-Schaum eingebracht und sodann werden die Werkzeughälften geschlossen. Die beiden Folien, d.h. die Slush-Haut im Werkzeugunterteil und die PUR-Folie im Werkzeugoberteil, werden nun formgebend miteinander verbunden.

Das PUR-Schaumsystem besitzt im fertigen Zustand eine Härte von beispielsweise etwa 40 Shore D. Die Slush-Haut dient sowohl als Dichtmedium für das Vakuum als auch als Verbindungsglied zum PUR-Schaumsystem. Die Slush-Haut ist vor allem aber auch zugleich die Außenhaut des fertigen Verdecks.

Nach Ablauf der für das Zweikomponenten-PUR-Gießharzsystem maßgeblichen Reaktionszeit im Werkzeug wird in einer weiteren Stufe die Kontur des Verdecks beschnitten.

Sodann wird das Verdeck dem Werkzeug entnommen. Es zeigt die Kontur eines Verdecks, so wie dies am Fahrzeug aussehen soll.

Eine erfindungsgemäße Verfahrensvariante zur Herstellung eines nahtlosen Verdecks umfasst entsprechend Anspruch 21 anstelle des Einzugs der Slush-Haut in das Werkzeug den folgenden Schritt:

In einem formgebenden Werkzeug wird die Slush-Haut bereits als 3-D Form hergestellt und als solche im Werkzeugunterteil positioniert. Die Slush-Haut wird dabei nur im Werkzeug gehalten, jedoch nicht mehr eingezogen. Deshalb muss sie hier nicht so dehnbar sein wie beim Vakuumeinzug gemäß dem ersten Verfahrensbeispiel.

Das die Slush-Haut beinhaltende Verdeck weist über die oben genannten Vorteile im wesentlichen den Vorzug auf, dass es keine aufwendigen, in der Regel textilen, Verdeckstoffe benötigt und dass die Slush-Haut selbst als Außenhaut des Verdecks in Wagenfarbe ausgeführt sein oder einen Lackauftrag erhalten kann, was bei herkömmlichen Verdeckstoffen nicht möglich ist.

Nachfolgend wird die Erfindung anhand von in den Zeichnungen beispielhaft dargestellten Ausführungsbeispielen näher erläutert. In den Zeichnungen zeigen:
- Fig. 1: eine schematische Darstellung des Schichtaufbaus eines ersten Verdeckbezugs,
- Fig. 2: eine entsprechende Darstellung einer zweiten Ausführungsform eines Verdeckbezugs,
- Fig. 3: dieselbe Darstellung wie Fig.2 zur Veranschaulichung einer Alternative,
- Fig. 4: einen Teilschnitt durch einen Verdeckbezug im Bereich einer sog. Spriegelanbindung,
- Fig. 5: eine Fig. 4 entsprechende Darstellung einer Ausführungsvariante,
- Fig. 6: eine schematische Darstellung eines Werkzeugs zur Herstellung eines Verdeckbezugs in einem ersten Verfahrensstadium, und
- Fig. 7: eine Fig. 6 entsprechende schematische Darstellung eines Werkzeugs in einem weiter fortgeschrittenen Verfahrensstadium.

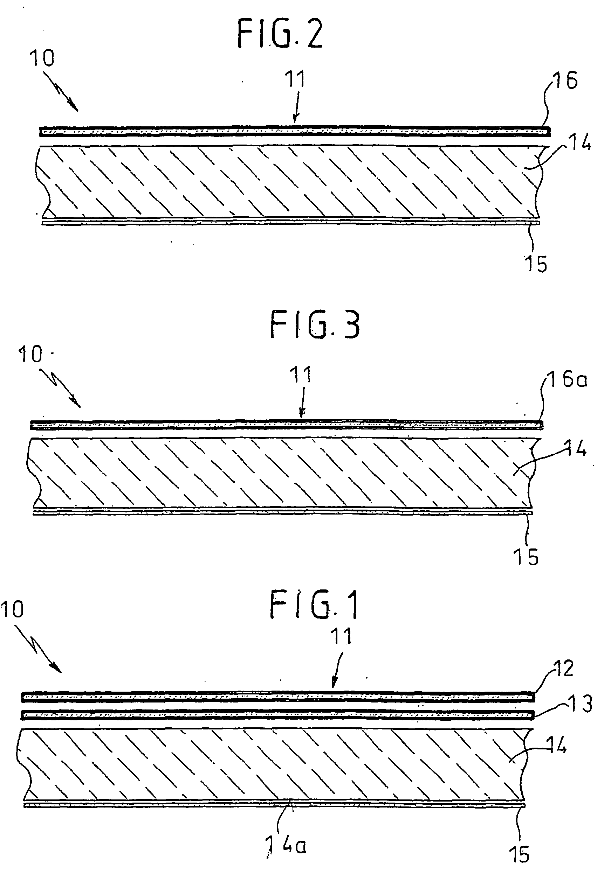

Entsprechend Fig. 1 weist ein insgesamt mit 10 bezeichneter einteiliger, d.h. nahtloser, Verdeckbezug gemäß einer ersten Ausführungsform - fahrzeugbezogen von außen nach innen betrachtet - folgenden Aufbau auf:

Die äußere Lage, die sog. Außenhaut 11, besteht aus einem hoch-dehnfähigen Oberstoff 12, z.B. aus einem Gewebe mit ca. 300-400% Dehnfähigkeit, beispielsweise aus Polyacryl.

Auf seiner Innenseite ist der Oberstoff 12 mit einer dünnen thermoplastischen Folie 13 kaschiert. In Fig. 1 sind Oberstoff 12 und Folie 13 lediglich zur Verdeutlichung als voneinander beabstandet dargestellt, obgleich sie aufgrund des Kaschiervorgangs fest miteinander verbunden sind. Die Folie 13 ist vorzugsweise etwa 20µm dünn und besteht bevorzugt aus einem thermoplastischen Polyurethan (TPU).

Nach innen folgt auf die Folie 13 eine Gießharz-Schaumschicht 14, die im wesentlichen vollflächig mit der Folie 13 verbunden wird. Zugleich dient die Folie 13 als Verbindungsglied zwischen der Außenhaut 11 und der Gießharz-Schaumschicht 14, zwischen denen sie angeordnet ist. Die Folie 13 hat insbesondere den Vorteil, dass beim Schäumen der Gießharzschicht 14 kein Material in das Gewebe 12 der Außenhaut 11 eindringen kann.

Die Gießharz-Schaumschicht 14 kann die innerste Lage des Verdeckbezugs 10 ausbilden. Wie es jedoch in Fig. 1 dargestellt ist und als besonders vorteilhaft angesehen wird, ist hier als innerste Lage des Verdeckbezugs 10 noch eine zusätzliche dünne PUR-Folie 15 vorgesehen. Ihr besonderer Vorzug besteht in der Hauptsache darin, dass bei der Herstellung des Verdeckbezugs in einem Formwerkzeug die entsprechende Werkzeughälfte nicht mit einem Trennmittel eingesprüht zu werden braucht, um ein Ankleben der Gießharz-Schaumschicht 14 an ihr zu verhindern. Ferner ist die äußere (d.i. die ins Fahrzeuginnere weisende) Fläche 14a der Gießharz-Schaumschicht 14 abgedeckt und somit optimal geschützt, insbesondere auch gegen Aufnahme von Feuchtigkeit in das geschäumte PUR-Material.

Fig. 2 zeigt eine zweite Ausführungsform eines Verdeckbezugs 10. Hier besteht die Außenhaut 11 als äußerste Verdecklage aus einer einteiligen dehnfähigen Slush-Haut 16, auf deren Innenseite wiederum eine im wesentlichen vollflächige Gießharz-Schaumschicht 14 angeordnet ist. Die Slush-Haut 16 ist standardmäßig im Bereich von 0,5 bis 3 mm herstellbar, wird im Rahmen der Erfindung jedoch in einer Ausführung von etwa 1 bis 2 mm Stärke verwendet. Ihre Außenfläche ist genarbt oder glatt, ihre Innenfläche glatt oder - etwa zum besseren Anhaften der Hinterschäumung angeraut.

Auch bei dieser Ausführung ist sodann eine dünne PUR-Folie der bereits beschriebenen Art auf der Innenseite der Schichtanordnung optional, wenngleich sehr empfehlenswert.

Fig. 3 unterscheidet sich nicht von Fig. 2. Damit soll zum Ausdruck gebracht werden, dass es für den Verdeckaufbau selbst keine Rolle spielt, ob eine Slush-Folie entsprechend Fig. 2 im Werkzeug, mit dem der Verdeckbezug 10 hergestellt wird, verarbeitet wird oder ob ein dreidimensional vorgeformter Slush-Formkörper 16a (Fig. 3) in das Werkzeug eingelegt wird.

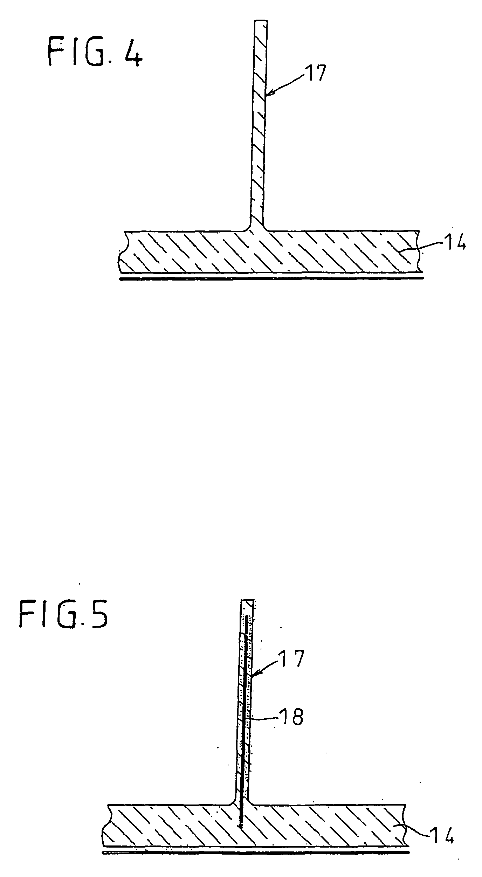

Fig. 4 zeigt in einem Teilschnitt eine streifenförmige Spriegelanbindung 17, die unmittelbar, d.h. werkstoffeinheitlich-stoffschlüssig, fahnenartig an die PUR-Gießharzschicht 14 mit angeformt ist.

Fig. 5 unterscheidet sich von Fig. 4 nur dadurch, dass in die Spriegelanbindung 17 eine Verstärkung 18 eingearbeitet ist, beispielsweise ein Stoffstreifen oder, was bevorzugt wird, ein Streifen aus einem Netzmaterial. Der Zweck eines solchen 'Einlegers' besteht im wesentlichen darin, Stabilität und Haltekräfte einer Spriegelanbindung 17 zu erhöhen.

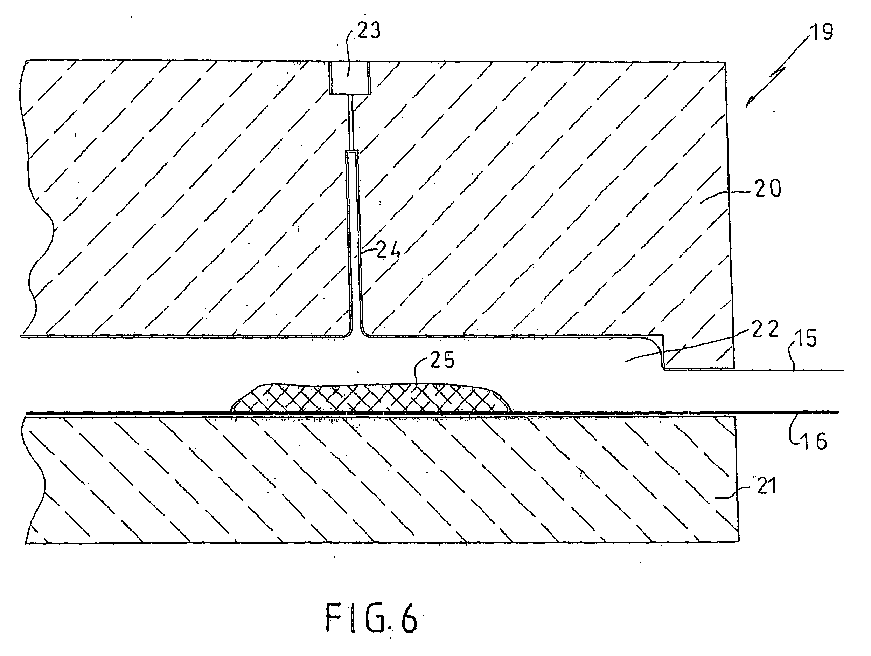

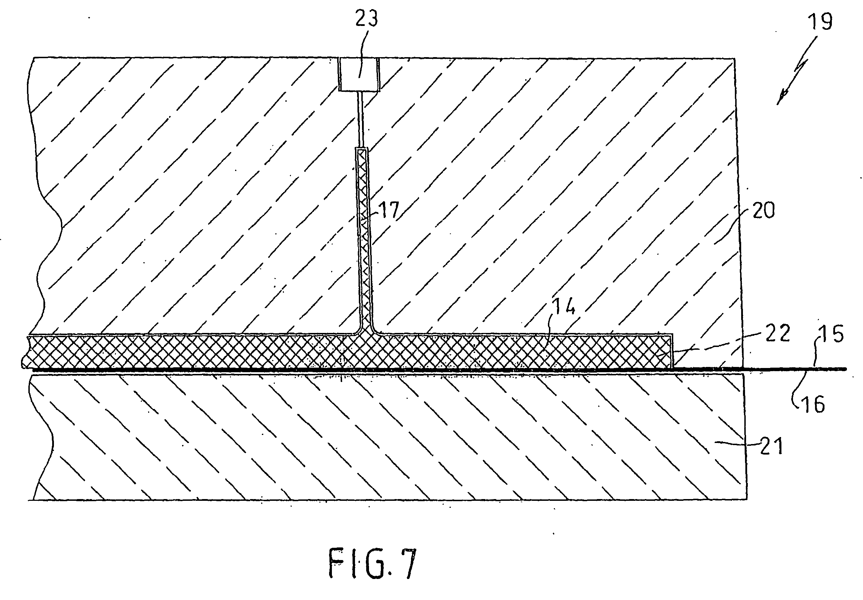

Die Fig. 6 und 7 dienen zur Veranschaulichung der Art und Weise der Herstellung eines erfindungsgemäßen Verdeckbezugs.

Mit 19 ist ein Werkzeug bezeichnet, das ein Werkzeugoberteil 20 und ein Werkzeugunterteil 21 umfasst, zwischen denen - im geschlossenen Zustand - ein Formhohlraum 22 vorhanden ist, der im wesentlichen der Form des fertigen Verdecks bzw. Verdeckbezugs 10 entspricht.

Anhand der eine Slush-Haut 16 umfassenden Ausführungsform sei der Herstellungsprozess eines Verdeckbezugs 10 unter Bezugnahme auf die Fig. 6 und 7 nachfolgend beschrieben.

Eine Slush-Haut 16, deren Kontur weitestgehend der Kontur des späteren Verdecks entspricht, wird in das formgebende Werkzeugunterteil 21 eingelegt. Der nach oben offene Hohlraum der Werkzeugform entspricht dabei im wesentlichen dem eines aufgespannten (d.h. über dem Fahrzeug geschlossenen) Verdecks It. Fahrzeugvorgabe. Sodann wird die Slush-Haut 16 durch ein im Werkzeug eingebrachtes Vakuumnest in das Werkzeug eingezogen und schmiegt sich satt an die Oberfläche des Formhohlraums 22.

Das formgebende Werkzeugoberteil 20 wird mit der dehnbaren PUR-Folie 15 mit einer Dicke von 20-70 µm überdeckt und die Folie 15 durch ein Vakuumnest in das Werkzeugoberteil 20 eingezogen, in dem sich im übrigen nicht dargestellte Aussparungen für die Spriegel des Verdeckgestells befinden können. Im Werkzeugoberteil 20 ist der Vakuumanschluss schematisch dargestellt und mit 23 bezeichnet. Ähnlich hat man sich den erwähnten, jedoch nicht dargestellten Vakuumanschluss im Werkzeugunterteil 21 vorzustellen.

Nun wird über einen Roboter geführten Mischkopf in das offene Werkzeugunterteil ein formgebender, elastischer und knickbarer, aus ein Zweikomponenten-PUR-Gießharzsystem gebildeten PUR-Schaum 25 eingebracht und sodann werden die Werkzeughälften 20, 21 geschlossen - vgl. Fig. 7.

Die beiden Folien, d.h. die Slush-Haut 16 im Werkzeugunterteil 21 und die PUR-Folie 15 im Werkzeugoberteil 20, werden nun formgebend miteinander verbunden. Die Slush-Haut 16 dient sowohl als Dichtmedium für das Vakuum als auch als Verbindungsglied zum PUR-Schaumsystem 14. Die Slush-Haut 16 bildet zugleich die Außenhaut 11 des fertigen Verdeckbezugs 10.

Nach Ablauf der für das Zweikomponenten-PUR-Schaumsystem maßgeblichen Reaktionszeit im Werkzeug 19 wird in einer weiteren Stufe die Kontur des Verdecks beschnitten. Sodann wird dem Werkzeug 19 das Verdeck entnommen, das nun die Kontur eines Verdecks aufweist, so wie dieses am Fahrzeug aussehen soll.

Eine erfindungsgemäße Verfahrensvariante zur Herstellung eines nahtlosen Verdecks umfasst anstelle des Einzugs der Slush-Haut 16 in das Werkzeug einen dreidimensional vorgeformten 'Slush-Formkörper'.

Die an erster Stelle geschilderte Erfindungsvariante eines Verdeckbezugs mit hoch-dehnfähigem Stoff 12 als Außenhaut 11 wird auf vergleichbare Weise in einem analogen Werkzeug erzeugt. Statt der Slush-Haut 16 wird der hoch dehnbare Oberstoff 12, dessen Kontur weitestgehend der Kontur des späteren Verdecks entspricht, in das formgebende Werkzeug eingelegt und die Innenfläche des Oberstoffs 12 wird mit einer dünnen Folie (z.B. 20µm Folie aus thermoplastischem Polyurethan) überdeckt. Dann wird durch das im Werkzeug befindliche Vakuumnest die Folie zusammen mit dem Oberstoff in das Werkzeug eingezogen. Die weiteren Schritte ändern sich nicht.

Alternativ kann der Oberstoff aber auch mit einer Folie kaschiert werden, bevor dieser Verbund in das Werkzeug eingelegt wird, welches die Schaumschicht auf die Folienseite aufgießt.

## Patentansprüche

1. Falt- oder Klappverdeck für Cabriolets, Roadster od.dgl., mit einem von Spriegeln getragenen flexiblen Verdeckbezug (10), **dadurch gekennzeichnet, dass** der Verdeckbezug (10) eine einteilige, hoch dehnfähige Außenhaut (11), eine im wesentlichen vollflächige Gießharz-Schaumschicht (14) sowie eine dünne thermoplastische Folie (13) umfasst, wobei die Außenhaut (11) mit der Folie (13) kaschiert ist und auf deren von der Außenhaut (11) wegweisenden Fläche die Gießharz-Schaumschicht (14) aufgebracht ist.

2. Verdeck nach Anspruch 1, **dadurch gekennzeichnet, dass** das Material für die Außenhaut (11) des Verdeckbezugs (10) aus einem Gewebe (12) mit ca. 300-400% Dehnfähigkeit besteht.

3. Verdeck nach Anspruch 2, **dadurch gekennzeichnet, dass** das Gewebe aus Polyacryl besteht.

4. Verdeck nach Anspruch 1, **dadurch gekennzeichnet, dass** die Folie (13) eine Stärke von etwa 20µm aufweist.

5. Verdeck nach Anspruch 1 oder 4, **dadurch gekennzeichnet, dass** die Folie(13) aus einem thermoplastischen Polyurethan (TPU) besteht.

6. Verdeck nach Anspruch 1, **dadurch gekennzeichnet, dass** die Gießharz-Schaumschicht (14) auf ihrer von der Außenhaut (11) wegweisenden Fläche (14a) von einer hochdehnbaren dünnen PUR-Folie (15) abgedeckt ist.

7. Falt- oder Klappverdeck für Cabriolets, Roadster od.dgl., mit einem von Spriegeln getragenen flexiblen Verdeckbezug (10), **dadurch gekennzeichnet, dass** der Verdeckbezug (10) als Außenhaut(11) eine einteilige dehnfähige Slush-Haut (16) umfasst, auf deren Innenseite eine im wesentlichen vollflächige Gießharz-Schaumschicht (14) angeordnet ist.

8. Verdeck nach Anspruch 7, **dadurch gekennzeichnet, dass** die Gießharz-Schaumschicht (14) auf ihrer von der Außenhaut (11) wegweisenden Fläche (14a) von einer hochdehnbaren dünnen PUR-Folie (15) abgedeckt ist.

9. Verdeck nach Anspruch 7, **dadurch gekennzeichnet, dass** die Slush-Haut (16) etwa 1 bis 2 mm stark ist.

10. Verdeck nach einem der Ansprüche 7 bis 9, **dadurch gekennzeichnet, dass** die Innenfläche der Slush-Haut (16) zum verbesserten Anhaften der Hinterschäumung (14) angeraut ist.

11. Verdeck nach Anspruch 1 oder 7, **dadurch gekennzeichnet, dass** die Gießharz-Schaumschicht (14) ein Zweikomponenten-PUR-Gießharzsystem ist.

12. Verdeck nach Anspruch 10, **gekennzeichnet durch** eine Härte der Gießharz-Schaumschicht (14) von etwa 40 Shore D.

13. Verdeck nach Anspruch 11, **dadurch gekennzeichnet, dass** an Sollfaltstellen des Verdeckbezugs (10) im wesentlichen linienhafte Sollknickzonen durch Querschnittsschwächung der PUR-Gießharzschicht (14) ausgebildet sind.

14. Verdeck nach Anspruch 13, **dadurch gekennzeichnet, dass** die Querschnittsschwächung die PUR-Gießharzschicht (14) in ihrem Querschnitt von üblicherweise ca. 7-8mm Dicke auf ca. 2mm Stärke reduziert.

15. Verdeck nach einem der Ansprüche 11 bis 14, **dadurch gekennzeichnet, dass** an die PUR-Gießharzschicht (14) insbesondere streifenförmige Spriegelanbindungen (17) mit angegossen sind, mit deren Hilfe der Verdeckbezug (10) an Spriegeln des Verdeckgestells befestigbar ist.

16. Verdeck nach Anspruch 15, **dadurch gekennzeichnet, dass** die Spriegelanbindungen (17) nur in Schaum und PUR-Folie ausgebildet sind.

17. Verdeck nach Anspruch 15, **dadurch gekennzeichnet, dass** in die Spriegelanbindungen (17) zur Verstärkung ein Stoff- oder Netzstreifen (18) eingelegt ist.

18. Verfahren zur Herstellung eines Verdecks nach einem der vorhergehenden Ansprüche, umfassend die Schritte:
a. ein hoch dehnbarer Oberstoff (12) , dessen Kontur weitestgehend der Kontur des späteren Verdecks entspricht, wird in ein formgebendes Werkzeug (19) eingelegt; wobei der nach oben offene Hohlraum der Werkzeugform im wesentlichen der Form eines aufgespannten (d.h. über dem Fahrzeug geschlossenen) Verdecks entspricht,
b. die Innenfläche des Oberstoffs (12) wird mit einer dünnen Folie (13) überdeckt,
c. durch ein im Werkzeug (19) vorgesehenes Vakuumnest wird die Folie (13) zusammen mit dem Oberstoff (12) in das Werkzeug (19) eingezogen und schmiegt sich dabei satt an die Oberfläche des Formhohlraums (22),
d. nach dem Schließen des Werkzeugoberteils (20) wird der Verbund Oberstoff / Folie mit einem formgebenden, elastischen und knickbaren, aus ein Zweikomponenten-PUR-Gießharzsystem gebildeten PUR-Schaum (25) hinterschäumt,
e. nach Ablauf der für das Zweikomponenten-PUR-Gießharzsystem maßgeblichen Reaktionszeit im Werkzeug (19) wird die Kontur des Verdecks (10) beschnitten, und
f. das Verdeck (10), das die Kontur eines Verdecks zeigt, so wie dies am Fahrzeug aussehen soll, wird sodann dem Werkzeug (19) entnommen.

19. Verfahren nach Anspruch 18, **gekennzeichnet durch** Austausch der Verfahrensschritte b. und c. gegen den Schritt:
g. der Oberstoff (12) wird mit einer Folie (13) kaschiert, bevor dieser Verbund in das Werkzeug (19) eingelegt wird.

20. Verfahren zur Herstellung eines Verdecks nach einem der Ansprüche 1 bis 17, insbesondere nach Anspruch 7, umfassend die Schritte:
a. eine dehnbare Slush-Haut (16), deren Kontur weitestgehend der Kontur des späteren Verdecks entspricht, wird in ein formgebendes Werkzeugunterteil (21) eingelegt, wobei der nach oben offene Hohlraum der Werkzeugform (19) im wesentlichen der Form eines aufgespannten (d.h. über dem Fahrzeug geschlossenen) Verdecks entspricht,
b. durch ein im Werkzeug (19) vorgesehenes Vakuumnest wird die Slush-Haut (16) in das Werkzeugunterteil (21) eingezogen und schmiegt sich dabei satt an die Oberfläche des Formhohlraums (22),
c. das formgebende Werkzeugoberteil (20) wird mit einer dehnbaren PUR-Folie (15) überdeckt und die Folie (15) durch ein Vakuumnest in das Werkzeugoberteil (20) eingezogen, in dem sich ggf. im übrigen Aussparungen für die Spriegel des Verdeckgestells befinden.
d. ein formgebender, elastischer und knickbarer, aus ein Zweikomponenten-PUR-Gießharzsystem gebildeten PUR-Schaum (25) wird in das Werkzeug (19) eingebracht und sodann werden die Werkzeughälften (20, 21) geschlossen, wobei die Slush-Haut im Werkzeugunterteil und die PUR-Folie (15) im Werkzeugoberteil formgebend miteinander verbunden werden.
e. nach Ablauf der für das Zweikomponenten-PUR-Gießharzsystem maßgeblichen Reaktionszeit im Werkzeug (19) wird in einer weiteren Stufe die Kontur des Verdecks beschnitten, und
f. das Verdeck, das die Kontur eines Verdecks zeigt, so wie dies am Fahrzeug aussehen soll, wird sodann dem Werkzeug entnommen.

21. Verfahren nach Anspruch 20, **gekennzeichnet durch** Austausch des Verfahrensschritts a. gegen den Schritt:
g. die in einem gesonderten formgebenden Werkzeug als 3-D Form hergestellte Slush-Haut (16) wird im Werkzeugunterteil (21) positioniert.

## Claims

1. Folding or convertible roof for cabriolets, roadsters or the like, comprising a flexible roof cover (10) supported by hoops, **characterised in that** the roof cover (10) includes a one-piece, highly extensible outer skin (11), a cast resin foam layer (14) covering substantially the full area thereof and a thin thermoplastic film (13), the outer skin (11) being laminated with the film (13) and the cast resin foam layer (14) being applied to the surface of the film (13) facing away from the outer skin (11).

2. Roof according to claim 1, **characterised in that** the material for the outer skin (11) of the roof cover (10) consists of a woven fabric (12) having an extensibility of approximately 300-400%.

3. Roof according to claim 2, **characterised in that** the woven fabric is made of polyacryl.

4. Roof according to claim 1, **characterised in that** the film (13) has a thickness of approximately 20 µm.

5. Roof according to claim 1 or 4, **characterised in that** the film (13) is made of a thermoplastic polyurethane (TPU).

6. Roof according to claim 1, **characterised in that** the cast resin foam layer (14) is covered on its surface (14a) facing away from the outer skin (11) with a highly extensible thin PUR film (15).

7. Folding or convertible roof for cabriolets, roadsters or the like, comprising a flexible roof cover (10) supported by hoops, **characterised in that** the roof cover (10) includes as the outer skin (11) a one-piece extensible slush skin (16) on substantially the full inner surface area of which is arranged a cast resin foam layer (14).

8. Roof according to claim 7, **characterised in that** the cast resin foam layer (14) is covered on its surface (14a) facing away from the outer skin (11) by a highly extensible thin PUR film (15).

9. Roof according to claim 7, **characterised in that** the slush skin (16) is approximately 1 to 2 mm thick.

10. Roof according to any one of claims 7 to 9, **characterised in that** the inner surface of the slush skin (16) is roughened for improved adhesion of the back-foaming (14).

11. Roof according to claim 1 or 7, **characterised in that** the cast resin foam layer (14) is a two-component PUR cast resin system.

12. Roof according to claim 10, **characterised by** a hardness of the cast resin foam layer (14) of approximately 40 Shore D.

13. Roof according to claim 11, **characterised in that** substantially linear predetermined buckling zones are formed at predetermined folding locations of the roof cover (10) by reduction of the cross-section of the PUR cast resin layer (14).

14. Roof according to claim 13, **characterised in that** the reduction of the cross-section of the PUR cast resin layer (14) reduces its cross-section from normally approximately 7-8 mm thick to approximately 2 mm thick.

15. Roof according to any one of claims 11 to 14, **characterised in that**, in particular, strip-shaped hoop connections (17), with the aid of which the roof cover (10) is attachable to hoops of the roof frame, are cast integrally on to the PUR cast resin layer (14).

16. Roof according to claim 15, **characterised in that** the hoop connections (17) are formed only of foam and PUR film.

17. Roof according to claim 15, **characterised in that** a fabric or net strip (18) is inserted in the hoop connections (17) for reinforcement.

18. Method for manufacturing a roof according to any one of the preceding claims, including the steps:
a. a highly extensible upper material (12), the contour of which corresponds very extensively to that of the subsequent roof, is placed in a forming tool (19), the upwardly open cavity of the tool mould corresponding substantially to the shape of a raised (i.e. closed over the vehicle) roof;
b. the inner surface of the upper material (12) is covered with a thin film (13);
c. by means of a vacuum arrangement provided in the tool (19) the film (13) together with the upper material (12) is drawn into the tool (19) and fits snugly against the surface of the mould cavity (22);
d. after the closing of the upper part (20) of the tool, the upper material/film laminate is back-foamed with a forming, elastic PUR foam (25) which is formed by a two-component PUR cast resin system and is capable of buckling;
e. after the expiry of the reaction time appropriate to the two-component PUR cast resin system in the tool (19) the contour of the roof (10) is trimmed, and
f. the roof (10), which shows the contour of a roof as it is to appear on the vehicle, is then removed from the tool (19).

19. Method according to claim 18, **characterised by** replacement of process steps b. and c. by the step:
g. the upper material (12) is laminated with a film (13) before this laminate is placed in the tool (19).

20. Method for manufacturing a roof according to any one of claims 1 to 17, in particular according to claim 7, including the steps:
a. a highly extensible slush skin (16), the contour of which corresponds very extensively to that of the subsequent roof, is placed in the lower part (21) of a forming tool, the upwardly open cavity of the tool mould (19) corresponding substantially to the shape of a raised (i.e. closed over the vehicle) roof;
b. by means of a vacuum arrangement provided in the tool (19) the slush skin (16) is drawn into the lower part (21) of the tool and fits snugly against the surface of the mould cavity (22);
c. the forming upper part (20) of the tool is covered with an extensible PUR film (15) and the film (15) is drawn by means of a vacuum arrangement into the upper part (20) of the tool in which, additionally, recesses for the hoops of the roof frame are optionally located;
d. a forming, elastic PUR foam (25) formed by a two-component PUR cast resin system is introduced into the tool (19) and the halves (20, 21) of the tool are then closed, the slush skin in the lower part of the tool and the PUR film (15) in the upper part of the tool being joined together in a forming manner;
e. after the expiry of the reaction time appropriate to the two-component PUR cast resin system in the tool (19), in a further stage the contour of the roof is trimmed, and
f. the roof (10), which shows the contour of a roof as it is to appear on the vehicle, is then removed from the tool.

21. Method according to claim 20, **characterised by** replacement of process step a. by the step:
g. the slush skin (16) manufactured in a separate forming tool as a three-dimensional shape is positioned in the lower part (21) of the tool.

## Revendications

1. Capote pliante ou basculante pour cabriolets, roadsters ou véhicules similaires, avec un revêtement de capote (10) flexible porté par des arceaux, **caractérisée en ce que** le revêtement de capote (10) comprend une peau extérieure (11) fortement extensible, monobloc, une couche alvéolaire en résine coulée (14) faisant pratiquement toute la surface, ainsi qu'une feuille (13) thermoplastique mince, la peau extérieure (11) étant scellée à la feuille (13) et la couche alvéolaire en résine coulée (14) étant appliquée sur sa surface opposée à la peau extérieure (11).

2. Capote selon la revendication 1, **caractérisée en ce que** le matériau pour la peau extérieure (11) du revêtement de capote (10) est formé d'un tissu (12) ayant une extensibilité d'environ 300 à 400 %.

3. Capote selon la revendication 2, **caractérisée en ce que** le tissu est formé de polyacryle.

4. Capote selon la revendication 1, **caractérisée en ce que** la feuille (13) présente une épaisseur d'environ 20 µm.

5. Capote selon la revendication 1 ou 4, **caractérisée en ce que** la feuille (13) est formée d'un polyuréthanne thermoplastique (TPU).

6. Capote selon la revendication 1, **caractérisée en ce que** la couche alvéolaire en résine coulée (14) est couverte, sur sa face (14a) opposée à la peau extérieure (11), par une feuille en PUR (15) mince fortement extensible.

7. Capote pliante ou basculante pour des cabriolets, roadsters ou véhicules similaires, avec un revêtement de capote (10) flexible porté par des arceaux, **caractérisée en ce que** le revêtement de capote (10) comprend en tant que peau extérieure (11) une peau granitée (16) extensible, monobloc, sur la face intérieure de laquelle est disposée une couche alvéolaire en résine coulée (14), faisant pratiquement toute la surface.

8. Capote selon la revendication 7, **caractérisée en ce que** la couche alvéolaire en résine coulée (14) est couverte sur sa face (14a) opposée à la peau extérieure (11) par une feuille de PUR (15) mince fortement extensible.

9. Capote selon la revendication 7, **caractérisée en ce que** la peau granitée (16) est d'une épaisseur d'environ 1 à 2 mm.

10. Capote selon l'une des revendications 7 à 9, **caractérisée en ce que** la face intérieure de la peau granitée (16) est rendue rugueuse, dans le but d'améliorer l'adhésion du moussage arrière (14).

11. Capote selon la revendication 1 ou 7, **caractérisée en ce que** la couche alvéolaire en résine coulée (14) est un système de résine coulée PUR bicomposant.

12. Capote selon la revendication 10, **caractérisée par** une dureté de la part de la couche alvéolaire en résine coulée (14), d'environ 40 Shore D.

13. Capote selon la revendication 11, **caractérisée en ce que** sur des points destinés à la pliure du revêtement de capote (10) sont réalisées des zones destinées à l'inflexion, sensiblement linéaires par le biais d'un affaiblissement de la section transversale de la couche en résine coulée en PUR (14).

14. Capote selon la revendication 13, **caractérisée en ce que** l'affaiblissement de la section transversale de la couche en résine coulée en PUR (14) donne une réduction de la section transversale usuellement d'environ 7 à 8 mm d'épaisseur à environ 2 mm d'épaisseur.

15. Capote selon l'une des revendications 11 à 14, **caractérisée en ce que**, sur la couche en résine coulée en PUR (14), sont coulés, d'un seul tenant par la matière, des attachements aux arceaux (17), en particulier en forme de bandes, à l'aide desquels le revêtement de capote (10) peut être fixé sur des arceaux du bâti de capote.

16. Capote selon la revendication 15, **caractérisée en ce que** les attachements aux arceaux (17) sont réalisés uniquement dans la mousse et la feuille de PUR.

17. Capote selon la revendication 15, **caractérisée en ce que** des bandes de tissus ou de filets (18) sont incorporées dans les attachements aux arceaux (17) dans le but d'un renforcement.

18. Procédé de fabrication d'une capote selon l'une des revendications précédentes, comprenant les étapes suivantes :
a. un tissu de dessus (12) fortement extensible, dont le contour correspond au maximum au contour de la capote ultérieure, est inséré dans un outil (19) de conformation ; l'espace creux, ouvert vers le haut, de la forme d'outil correspondant sensiblement à la forme d'une capote tendue (c'est-à-dire fermée au-dessus du véhicule),
b. la face intérieure du tissu de dessus (12) est recouverte d'une feuille mince (13),
c. au moyen d'un filet à vide, prévu dans l'outil (19), on attire la feuille (13), conjointement avec le tissu de dessus (12), dans l'outil (19) et on lui fait épouser alors complètement à plat la forme de la surface de l'espace creux de moule (22),
d. après fermeture de la partie supérieure d'outil (20), le composite tissu de dessus/feuille est soumis à un moussage par l'arrière avec une mousse de PUR (25) formée d'un système de résine coulée à base de PUR bicomposant, dans un but de conformation, présentant une élasticité et pouvant être plié,
e. après expiration du temps de réaction déterminant pour le système de résine coulée à base de PUR bicomposant, dans l'outil (19), on découpe le contour de la capote (10), et
f. la capote (10), qui présente le contour d'une capote, tel que ceci doit en offrir l'aspect sur le véhicule, est ensuite prélevée de l'outil (19).

19. Procédé selon la revendication 18, **caractérisé par** la permutation des étapes de procédé b. et c. pour l'étape :
g. le tissu de dessus (12) est scellé à une feuille (13), avant que ce composite soit inséré dans l'outil (19).

20. Procédé de fabrication d'une capote selon l'une des revendications 1 à 17, en particulier selon la revendication 7, comprenant les étapes suivante :
a. une peau granitée (16) extensible, dont le contour correspond au maximum au contour de la capote ultérieure est insérée dans une partie inférieure d'outil (21) à rôle de conformation, l'espace creux ouvert vers le haut de la forme d'outil (19) correspondant sensiblement à la forme d'une capote tendue (c'est-à-dire fermée sur le véhicule),
b. au moyen d'un filet à vide, prévu dans l'outil (19), la peau granitée (16) est insérée dans la partie inférieure d'outil (21) et épouse alors sur toute la surface la forme de la face supérieure de l'espace creux de moule (22),
c. la partie supérieure d'outil (20) à rôle de conformation est recouverte d'une feuille de PUR (15) extensible, et la feuille (15) est insérée, au moyen d'un filet à vide, dans la partie supérieure d'outil (20) dans laquelle se trouvent, le cas échéant, au reste des évidements pour les arceaux du bâti de capote,
d. une mousse de PUR (25) formée d'un système de résine coulée à base de PUR bicomposant à rôle de conformation, élastique et pouvant plier, est introduite dans l'outil (19) et les moitiés d'outil (20, 21) sont ensuite fermées, la peau granitée se trouvant dans la partie inférieure d'outil et la feuille de PUR (15) se trouvant dans la partie supérieure d'outil étant reliées ensemble dans un but de conformation,
e. après expiration du temps de réaction déterminant pour le système de résine coulée à base de PUR bicomposant, dans l'outil (19), lors d'une étape supplémentaire, on procède au découpage du contour de la capote, et
f. la capote, qui présente le contour d'une capote, ainsi que ceci doit en avoir l'aspect sur le véhicule, est ensuite prélevée de l'outil (19).

21. Procédé selon la revendication 20, **caractérisée par** le remplacement de l'étape de procédé a. par l'étape :
g. la peau granitée (16), fabriquée dans un outil à rôle de conformation séparé, réalisé sous la forme d'outil tridimensionnel, est positionnée dans la partie inférieure d'outil (21).
